# FASCICULE DE BREVET EUROPEEN

(11) **EP 0 342 098 B1**
(45) Date de publication et mention de la délivrance du brevet: **10.03.1993**
(21) Numéro de dépôt: 89401234.3
(22) Date de dépôt: 28.04.1989
(51) Int. Cl.: G01F 23/72

(54) **Jauge de niveau**
Füllstandanzeiger
Level gauge

(30) Priorité: 10.05.1988 FR 8806303
(43) Date de publication de la demande: 15.11.1989
(73) Titulaire: AUTOMOBILES PEUGEOT, 75116 Paris (FR); AUTOMOBILES CITROEN, 92200 Neuilly-sur-Seine (FR)
(72) Inventeur: Rousseau, Michel, F-92400 Courbevoie (FR)
(74) Mandataire: Durand, Yves Armand Louis

(56) Documents cités:
- FR-A- 1 144 347
- GB-A- 2 012 431
- GB-A- 2 175 698
- US-A- 3 343 416
- US-A- 3 678 750
- US-A- 3 864 614

## Description

L'invention concerne une jauge de niveau pour contrôler la quantité d'un liquide contenu dans un réservoir, par exemple, d'un véhicule automobile.

On connaît d'après FR-A-1 144 347, une jauge de niveau comportant un flotteur qui est susceptible d'être déplacé dans une enceinte sous l'action d'un liquide. Cette jauge est pourvue d'un élément électrique formant télé-indicateur, grâce auquel le niveau de liquide peut être mesuré en fonction de la position du flotteur. D'après ce document, le télé-indicateur est constitué par un noyau magnétique lié au flotteur et une bobine d'induction qui s'étend suivant toute la hauteur de l'enceinte et dont le nombre de spires varie dans le sens du déplacement du flotteur.

D'autres jauges de niveau telles que celle décrite dans US-A-3 343 416 comportent un flotteur qui agit pour faire varier le temps de transmission à un capteur d'une impulsion électrique, en fonction des changements du niveau à mesurer.

On a également proposé, notamment d'après US-A-3 678 750, de munir le flotteur d'un élément magnétique apte à actionner des contacteurs disposés le long d'un tube afin de court-circuiter des résistances en fonction du niveau à mesurer de liquide.

Pour sa part, GB-A-2 012 431 se rapporte à une jauge qui recourt à la mesure des variations des forces électro-motrices induites par courants de Foucault dans une bobine, par un tube métallique solidaire du flotteur.

Toutefois, toutes ces jauges de niveau présentent l'inconvénient d'être complexes et sensibles aux

impuretés contenues dans le liquide, ce qui entraîne un encrassement des contacts ainsi qu'un phénomène d'électrolyse et diminue considérablement la fiabilité ainsi que la longévité de la jauge.

Par ailleurs, on connaît, d'après par exemple FR-A-2 345 708, une jauge de niveau correspondant aux caractéristiques énoncées dans le préambule de la revendication 1.

Dans cette jauge connue, la bobine qui est fixe par rapport à l'enceinte, est reliée à un système d'exploitation contrôlant un moyen indicateur constitué par une alarme. Ainsi, lorsque le niveau limite du liquide est atteint, le noyau magnétique qui est disposé sur le flotteur, se déplace par rapport à la bobine, en produisant une variation d'inductance sous l'effet de laquelle le système d'exploitation déclenche l'alarme afin de prévenir par exemple le conducteur du véhicule. Par conséquent, cette jauge de niveau ne procure aucune information en ce qui concerne le volume du liquide contenu dans le réservoir en dehors du niveau minimum admissible.

Aussi, la présente invention a pour but de remédier aux inconvénients précités en proposant une jauge de niveau fiable, simple et efficace, et permettant une mesure continue du niveau du liquide contenu dans le réservoir.

A cet effet, l'invention a pour objet une jauge de niveau pour contrôler la quantité d'un liquide dans un réservoir, et du type comprenant une bobine et un noyau magnétique relativement déplaçables sous l'action d'un flotteur à l'intérieur d'une enceinte sensiblement verticale, la bobine étant reliée électriquement à un système d'exploitation contrôlant un moyen indicateur, caractérisée en ce que le noyau magnétique, qui comporte une section transversale diminuant du haut vers le bas du réservoir et qui s'étend sur à peu près toute la hauteur du réservoir, est fixé coaxialement à l'intérieur d'un tube étanche, ladite bobine qui est solidaire du flotteur étant guidée à coulissement le long de ce tube.

Suivant une autre caractéristique, la section transversale du noyau magnétique diminue de façon continue et est de préférence tronconique.

On précisera que selon un autre mode de réalisation, le noyau magnétique est constitué par plusieurs tronçons cylindriques, qui sont coaxiaux, adjacents et de diamètres respectifs différents, pour constituer un empilement vertical dont la section diminue progressivement du haut vers le bas du réservoir.

Par ailleurs, les tronçons cylindriques ont des longueurs respectives différentes.

Suivant encore une autre caractéristique, le tube étanche de guidage est fermé à ses deux extrémités, par exemple, par des flasques respectivement supérieur et inférieur de l'enceinte.

Mais d'autres caractéristiques et avantages de l'invention apparaîtront mieux dans la description détaillée qui suit et se réfère aux dessins annexés donnés uniquement à titre d'exemple et dans lesquels :
La figure 1 est une vue en perspective et partiellement ouverte d'une jauge de niveau selon l'invention comportant un noyau magnétique selon un premier mode de réalisation ; et
La figure 2 est une vue en perspective du noyau magnétique selon un deuxième mode de réalisation.

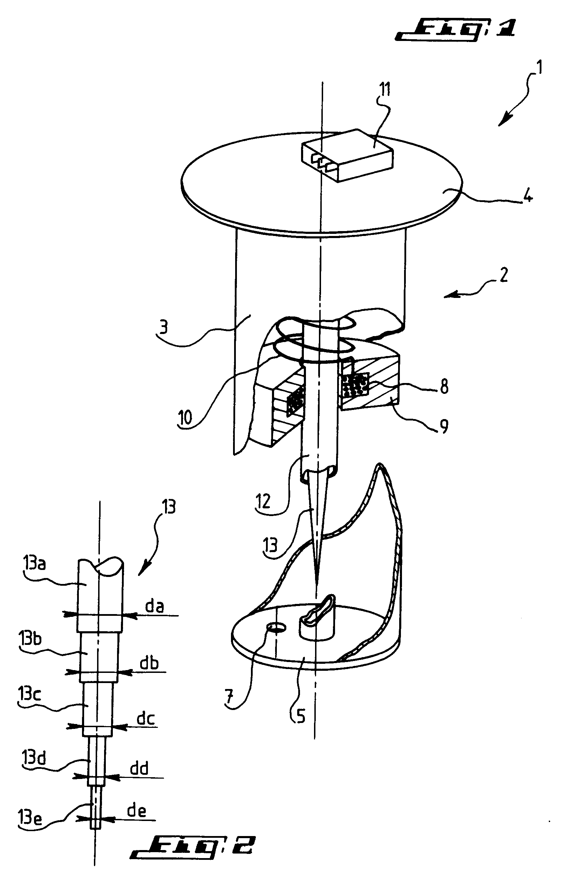

En se référant à la figure 1, une jauge de niveau 1, conforme à l'invention, est constituée par une enceinte 2, formée par une paroi tubulaire 3 qui est sensiblement verticale et qui est munie à ses deux extrémités de flasques, respectivement supérieur 4 et inférieur 5.

Le flasque supérieur 4 est fixé à une paroi d'un réservoir, non représentée, tandis que le flasque inférieur 5 est pourvu d'un moyen amortisseur constitué par un orifice 7, dans lequel entre et sort le liquide contenu dans le réservoir.

Par ailleurs, la jauge de niveau 1 comporte à l'intérieur de l'enceinte 2, une bobine 8 qui est noyée dans un flotteur de forme annulaire 9 et qui est pourvue d'éléments électriquement conducteurs 10 reliés à un élément connecteur 11, fixé sur la surface supérieure du flasque 4 et permettant la liaison électrique entre la bobine 8 et un système d'exploitation contrôlant un noyau indicateur, non représenté.

D'autre part, la bobine 8, sous l'action du flotteur 9, est axialement déplaçable le long d'un tube de guidage 12 dans lequel est fixé coaxialement un noyau magnétique 13 réalisé par exemple en ferrite.

Le tube de guidage 12 est fermé à ses deux extrémités, par exemple, d'une part par le flasque supérieur 4 et d'autre part par le flasque inférieur 5.

Ainsi, le tube de guidage 12, qui a été partiellement découpé sur la figure 1 pour une meilleure compréhension des dessins, constitue un moyen d'étanchéité en isolant le noyau magnétique 13 du liquide introduit à l'intérieur de l'enceinte 2.

D'autre part, on remarquera que le tube de guidage 12, grâce à sa disposition entre le noyau magnétique 13 et la bobine 8, élimine tout contact entre ces derniers.

Par ailleurs, on remarquera que suivant un premier mode de réalisation représenté sur la figure 1, le noyau magnétique 13 est de forme sensiblement tronconique, sa section transversale diminuant de façon continue du haut vers le bas du réservoir.

Selon un deuxième mode de réalisation représenté sur la figure 2, le noyau magnétique 13 est constitué par plusieurs tronçons cylindriques coaxiaux et adjacents 13a-13e, dont les diamètres respectifs da, db, dc, dd, de, qui sont différents, constituent un empilement vertical à section diminuant progressivement du haut vers le bas du réservoir.

On précisera ici que les différents tronçons 13a-13e peuvent être isolés les uns des autres par l'intermédiaire d'une interface appropriée.

D'autre part, ce mode de réalisation permet d'adapter les diamètres et les longueurs des tronçons cylindriques à la forme du réservoir, lorsque celui-ci n'est pas parfaitement parallélépipèdique. On obtient ainsi une variation continue de l'inductance en fonction du volume du liquide et non plus de son niveau.

Un autre avantage de cette variante de réalisation est de permettre la correction des trop grands écarts de mesure constatés lorsque le réservoir est en position inclinée. Dans ce cas, en effet, les variations de niveau les plus importantes se produisent dans le haut et dans le bas du réservoir. Il suffira donc de disposer des tronçons de longueur plus importante aux deux extrémités du noyau magnétique pour obtenir une correction de ladite variation.

On précisera ici que le noyau magnétique 13 s'étend sensiblement sur toute la hauteur du réservoir tandis qu'il comporte une section transversale variable entraînant, lors du déplacement relatif de la bobine 8 et du noyau magnétique 13, une variation d'inductance analysée par le système d'exploitation et qui permet un contrôle continu du niveau du liquide contenu dans le réservoir.

Par ailleurs, la longueur du noyau 13 étant sensiblement inférieure à la longueur de la paroi tubulaire 3, la bobine 8, par l'intermédiaire du flotteur 9, en atteignant le fond de la jauge 1, subit une variation d'inductance importante susceptible d'être détectée par le système d'exploitation et permettant, par exemple, l'allumage d'un dispositif d'alerte.

De même, on précisera ici que la mesure de l'inductance au sein du système d'exploitation, peut être réalisée en mesurant l'amplitude ou la fréquence d'oscillation d'un circuit oscillateur comportant la bobine 8.

## Revendications

1. Jauge de niveau pour contrôler la quantité d'un liquide dans un réservoir, et du type comprenant une bobine (8) et un noyau magnétique (13) relativement déplaçables sous l'action d'un flotteur (9) à l'intérieur d'une enceinte (2) sensiblement verticale, la bobine (8) étant reliée électriquement à un système d'exploitation contrôlant un moyen indicateur, caractérisée en ce que le noyau magnétique (13), qui comporte une section transversale diminuant du haut vers le bas du réservoir et qui s'étend sur à peu près toute la hauteur du réservoir, est fixé coaxialement à l'intérieur d'un tube étanche (12), ladite bobine (8) qui est solidaire du flotteur (9) étant guidée à coulissement le long de ce tube (12).

2. jauge de niveau selon la revendication 1, caractérisée en ce que la section transversale du noyau magnétique (13) diminue de façon continue et est de préférence tronconique.

3. Jauge de niveau selon la revendication 1, caractérisée en ce que le noyau magnétique (13) est constitué par plusieurs tronçons cylindriques (13a, 13e), qui sont coaxiaux, adjacents et de diamètres respectifs différents, pour constituer un empilement vertical dont la section diminue progressivement du haut vers le bas du réservoir.

4. Jauge de niveau selon la revendication 3, caractérisée en ce que les tronçons cylindriques (13a, 13e) ont des longueurs respectives différentes.

5. Jauge de niveau selon la revendication 4, caractérisée en ce que le tube étanche de guidage (12) est fermé à ses deux extrémités, par exemple, par des flasques respectivement supérieur (4) et inférieur (5) de l'enceinte (2).

## Patentansprüche

1. Pegelanzeiger zur Kontrolle der Menge einer Flüssigkeit in einem Behälter und der eine Spule (8) und einen magnetischen Kern (13) aufweisenden Gattung, die innerhalb einer etwa senkrechten Umschliessungs-Hülle (2) unter der Wirkung eines Schwimmers (9) relativ verschiebbar sind, wobei die Spule (8) an ein ein Anzeigemittel kontrollierendes Auswertungssystem elektrisch angeschlossen ist, dadurch gekennzeichnet, dass der magnetische Kern (13), der einen von oben nach unten des Behälters abnehmenden Querschnitt aufweist und der sich ungefähr über die ganze Höhe des Behälters erstreckt, innerhalb eines dichten Rohres (12) koaxial befestigt ist, wobei die besagte Spule (8), die mit dem Schwimmer (9) fest verbunden ist, entlang dieses Rohres (12) gleitend geführt wird.

2. Pegelanzeiger gemäss Anspruch 1, dadurch gekennzeichnet, dass der Querschnitt des magnetischen Kerns (13) in stetiger Weise abnimmt und vorzugsweise kegelstumpfförmig ist.

3. Pegelanzeiger nach Anspruch 1, dadurch gekennzeichnet, dass der magnetische Kern (13) durch mehrere zylindrische Abschnitte (13a, 13e) gebildet wird, die koaxial, angrenzend und jeweils mit verschiedenen Durchmessern ausgebildet sind, um einen senkrechten Stapel, dessen Querschnitt von oben nach unten des Behälters fortschreitend abnimmt, zu bilden.

4. Pegelanzeiger nach Anspruch 3, dadurch gekennzeichnet, dass die zylindrischen Abschnitte (13a, 13e) jeweils unterschiedliche Längen haben.

5. Pegelanzeiger nach Anspruch 4, dadurch gekennzeichnet, dass das dichte Führungsrohr (12) an seinen beiden Enden zum Beispiel jeweils durch einen oberen (4) und einen unteren Flansch (5) der Umschliessungshülle (2) geschlossen ist.

## Claims

1. Level gauge for controlling the amount of a liquid in a tank and of the type comprising a coil (8) and a magnetic core (13) relatively displaceable under the action of a float (9) inside of a substantially vertical enclosed space (2), the coil (8) being electrically connected to a data handling system controlling an indicator means, characterized in that the magnetic core (13) which comprises a cross-section decreasing from top to bottom of the tank and which extends over nearly the whole height of the tank is coxially fastened inside of a fluid-tight tube (12), the said coil (8) which is made fast to the float (9) being guided in sliding relationship along this tube (12).

2. Level gauge according to claim 1, characterized in that the cross-section of the magnetic core (13) decreases in a continous manner and preferably is frusto-conical.

3. Level gauge according to claim 1, characterized in that the magnetic core (13) is constituted by several cylindrical segments (13a, 13e) which are coaxial, adjacent and of respective different diameters to constitute a vertical stack the section of which gradually decreases from top to bottom of the tank.

4. Level gauge according to claim 3, characterized in that the cylindrical segments (13a, 13e) have respective differents lengths.

5. Level gauge according to claim 4, characterized in that the fluid-tight guiding tube (12) is closed at its two ends for example by upper and lower flanges (4, 5), respectively, of the enclosed space (2).
